# EUROPÄISCHE PATENTANMELDUNG

(11) **EP 4 696 425 A1**
(43) Veröffentlichungstag der Anmeldung: **18.02.2026**
(21) Anmeldenummer: 25194832.9
(22) Anmeldetag: 08.08.2025
(51) Int. Cl.: B08B 5/02, F24F 3/167, B29C 49/46, B65B 31/00, B65B 55/00, B65C 3/00, B67C 3/22

(54) **BEHÄLTERBEHANDLUNGSANLAGE MIT EINEM REINRAUM UND ZUGEHÖRIGES BETRIEBSVERFAHREN**

(30) Priorität: 16.08.2024 DE 102024123409
(71) Anmelder: KRONES AG, 93073 Neutraubling (DE)
(72) Erfinder: VOGELSANG, Christian, 93073 Neutraubling (DE)
(74) Vertreter: v. Bezold & Partner Patentanwälte - PartG mbB

(57) **Zusammenfassung**

Die Erfindung betrifft u.a. eine Behälterbehandlungsanlage (10) aufweisend einen Reinraum (12), mindestens eine Vorrichtung (20, 22, 24) zum Transportieren und/oder Behandeln von Behältern, die in dem Reinraum (12) angeordnet ist, und eine Luftführungseinrichtung (30). Die Luftführungseinrichtung (30) weist einen Lufteinlass (32), der in dem Reinraum (12) angeordnet ist, und einen Luftauslass (44), der in dem Reinraum (12) zum Abgeben eines gerichteten Reinraumluftstroms (R) zum Reinigen und/oder Kühlen angeordnet ist, auf. Die Luftführungseinrichtung (30) weist eine Fluidleitung (34), die den Lufteinlass (32) und den Luftauslass (44) miteinander verbindet, und eine Luftfördereinheit (36), die in der Fluidleitung (34) angeordnet ist, auf.

## Beschreibung

### Technisches Gebiet

Die Erfindung betrifft eine Behälterbehandlungsanlage mit einem Reinraum und ein Verfahren zum Betreiben einer Behälterbehandlungsanlage mit einem Reinraum.

### Technischer Hintergrund

Es ist bekannt, Behälter in einer Behälterbehandlungsanlage zu behandeln, z. B. herzustellen, zu füllen und zu verschließen. Sofern besondere hygienische Anforderungen an die Behälterbehandlung bestehen, kann die Behälterbehandlungsanlage bspw. einen Reinraum aufweisen, in der die Behandlung der Behälter unter Reinraumbedingungen stattfindet.

Es kann die Notwendigkeit bestehen, bestimmte Komponenten im Reinraum, wie Kameras, optische Einbauten oder Sensoren, zielgerichtet abzureinigen. Hierbei sollen insbesondere Partikel von der jeweiligen Komponente entfernt werden. Diese Partikel können bspw. durch Abrieb an den Behälter bei der Handhabung der Behälter im Reinraum entstehen. Ziel des Reinigens ist es, eine Funktionsbeeinträchtigung zu verhindern oder zumindest die Funktion der Komponente bis zum folgenden Wartungszyklus zu verlängern.

Die Reinigung kann bspw. dadurch erfolgen, dass der Reinraum geöffnet und die jeweilige Komponente manuell gereinigt wird oder dass Bürsten oder Wischer verwendet werden, die gezielt den zu reinigenden Abschnitt der jeweiligen Komponente berühren.

Nachteilig an diesen Lösungen ist, dass durch das Öffnen des Reinraums die Behälterbehandlung für einen relativ langen Zeitraum unterbrochen wird, da nach dem Reinigen und Schließen des Reinraums zunächst eine Reinraumumgebung im Reinraum wiederhergestellt werden muss. Ferner können bei der Verwendung von Bürsten oder Wischern mechanische Beschädigungen, wie Kratzer, der zur reinigenden Oberfläche entstehen.

Es ist auch möglich, dass im Reinraum Komponenten angeordnet sind, die von einer Kühlung profitieren würden.

Der Erfindung liegt die Aufgabe zu Grunde, eine verbesserte Technik zum Reinigen und/oder Kühlen im Reinraum einer Behälterbehandlungsanlage zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine Behälterbehandlungsanlage aufweisend einen Reinraum und mindestens eine (z. B. Rundläufer-) Vorrichtung zum Transportieren und/oder Behandeln (z. B. Temperieren, Herstellen, Füllen, Verschließen und/oder Ausstatten) von Behältern, wobei die mindestens eine Vorrichtung in dem Reinraum angeordnet ist. Die Behälterbehandlungsanlage weist ferner eine (z. B. Reinigungs- und/oder Kühl-) Luftführungseinrichtung auf, die einen Lufteinlass, der in dem Reinraum zum Empfangen von Reinraumluft aus dem Reinraum angeordnet ist, und einen Luftauslass, der in dem Reinraum zum Abgeben eines gerichteten Reinraumluftstroms (z. B. Sterilluftstrom) zum Reinigen und/oder Kühlen angeordnet ist, aufweist. Die Luftführungseinrichtung weist ferner eine Fluidleitung, die den Lufteinlass und den Luftauslass miteinander verbindet, und eine Luftfördereinheit (z. B. Gebläse oder Verdichter), die in der Fluidleitung zum Ansaugen der Reinraumluft von dem Lufteinlass und Fördern der angesaugten Reinraumluft zu dem Luftauslass angeordnet ist, auf.

Vorteilhaft ermöglicht die Vorrichtung durch den gerichteten Reinraumluftstrom eine zielgerichtete Reinigung und/oder Kühlung innerhalb des Reinraums an einer gewünschten Position, wobei hierfür nur geringe Kosten durch einen geringen baulichen Aufwand erforderlich sind. Im Gegensatz zu einem extern des Reinraums erzeugten Reinraumluftstrom/Sterilluftstrom müssen vorteilhaft keine umfangreichen bautechnischen Maßnahmen in Form von Sterilfiltern und langen, regelmäßig zu sterilisierenden Rohrleitungen bereitgestellt werden. Bevorzugt kann der gerichtete Reinraumluftstrom zum Abblasen von Partikeln von Oberflächen genutzt werden, wodurch eine effektive und oberflächenschonende Abreinigung ermöglicht wird. Vorteilhaft wird auch eine hohe Skalierbarkeit der Abblasung ermöglicht, ohne dass ein Reinraumdruck innerhalb des Reinraums maßgeblich beeinflusst wird. Vorteilhaft benötigt die vorgeschlagene Technik auch keinen zusätzlichen Medienverbrauch eines relativ teueren Mediums wie Sterilluft und ist durch die Integration im Reinraum selbststerilisierend. Die vorgeschlagene Technik kann bspw. auch bei nicht-aseptischen Anwendungen zum Einsatz kommen.

Beispielsweise kann die mindestens eine Vorrichtung eine Heizvorrichtung zum Heizen von Vorformlingen (Behälterrohlinge bzw. Preforms) der Behälter, eine Behälterherstellvorrichtung (z. B. Behälterblasmaschine), eine Beschichtungsvorrichtung zum Beschichten der Behälter, eine Entpalletiervorrichtung, eine Rinsvorrichtung (z. B. mit Rinsdüsen), eine Sterilisierungsvorrichtung (z. B. mit Sterilisationsdüsen) zum Sterilisieren der Behälter, eine Füllvorrichtung (z. B. mit Füllventilen) zum Füllen der Behälter (z. B. mit einem flüssigen oder pastösen Füllgut), eine Verschließvorrichtung (z. B. mit Verschließköpfen) zum Verschließen der Behälter, eine Etikettiervorrichtung (z. B. mit Etikettieraggregaten) zum Etikettieren der Behälter, eine Druckvorrichtung (z. B. mit Druckköpfen) zum Bedrucken der Behälter, eine Pasteurisiervorrichtung zum Pasteurisieren der Behälter, eine Klebegebindeherstellvorrichtung (z. B. mit Klebstoffapplikationsdüsen), eine Verpackungsvorrichtung (z. B. mit Packköpfen oder Folieneinschlägern) und/oder eine Palettiervorrichtung (z. B. mit Palettierköpfen, Schiebeplatten oder dgl.) aufweisen.

In einem Ausführungsbeispiel weist der Luftauslass einen Düsenabschnitt zum Erzeugen des gerichteten Reinraumluftstroms auf. Vorteilhaft kann damit der gerichtete Reinraumluftstrom zuverlässig und eng begrenzt erzeugt werden.

In einem weiteren Ausführungsbeispiel ist der Lufteinlass als ein freies Leitungsende ausgeführt, und/oder der Luftauslass ist als ein freies Leitungsende ausgeführt. Vorteilhaft kann damit eine einfache Konstruktion der Luftführungseinrichtung ermöglicht werden sowie eine direkte Ansaugung von Reinraumluft aus dem Reinraum und direkte Abgabe dieser angesaugten Reinraumluft als gerichteten Reinraumluftstrom in den Reinraum.

In einer Ausführungsform ist der Luftauslass in einer Horizontalrichtung gerichtet oder nach unten gerichtet. Vorteilhaft kann damit verhindert werden, dass der gerichtete Reinraumluftstrom Partikel im Reinraum ungewünscht nach oben transportiert und diese Partikel bspw. die Behältermündung der Behälter erreichen und kontaminieren können.

In einer weiteren Ausführungsform ist der Luftauslass zum Abgeben des gerichteten Reinraumluftstroms in einer Richtung hin zu einer zu reinigenden und/oder zu kühlenden Komponente der Behälterbehandlungsanlage angeordnet. Die zu reinigende und/oder zu kühlende Komponente ist in dem Reinraum angeordnet. Vorzugsweise kann der Luftauslass benachbart zu der zu reinigenden und/oder zu kühlenden Komponente angeordnet sein. Alternativ oder zusätzlich kann der Luftauslass so relativ zu der zu reinigenden und/oder zu kühlenden Komponente ausgerichtet sein, dass der aus dem Luftauslass abgebbare, gerichtete Reinraumluftstrom auf die zu reinigende und/oder zu kühlenden Komponente, trifft und/oder die zu reinigende und/oder zu kühlenden Komponente passiert. Vorteilhaft kann damit eine Reinigung der Komponente zum Entfernen von Partikeln von der Komponente und/oder eine Kühlung der Komponente erreicht werden.

In einer Ausführungsvariante ist die zu reinigende und/oder zu kühlende Komponente eine Sensoreinrichtung, vorzugsweise zum Erfassen der Behälter, die in dem Reinraum angeordnet ist. Optional kann die Sensoreinrichtung eine berührungslose und/oder optische Sensoreinrichtung sein, vorzugsweise aufweisend mindestens eines von einer Kamera, einem Ultraschallsensor, einem Lasersensor, einem Abstandsensor und einem LED-Sensor. Vorteilhaft kann die hierin vorgeschlagene Technik somit zum Abreinigen/Abblasen von Partikeln von der Sensoreinrichtung genutzt werden, wodurch sich die Messgenauigkeit/Messqualität erhöhen und aufrechterhalten werden kann, ohne dass hierfür eine regelmäßige Öffnung des Reinraums mit Betriebsunterbrechung und Reinigung notwendig ist. Letztlich kann dadurch vorteilhaft eine nutzbare Betriebszeit der Behälterbehandlungsanlage erhöht werden.

In einer weiteren Ausführungsvariante ist der Luftauslass so angeordnet, dass der gerichtete Reinraumluftstrom zum Entlangströmen an den von der mindestens einen Vorrichtung behandelten und/oder transportierten Behältern abgebbar ist, vorzugsweise unterhalb von einer Behältermündung der Behälter und/oder zum Ablenken von von den Behältern herabrieselnden Partikeln (z. B. weg von einer oder der zu reinigenden und/oder zu kühlenden Komponente, vorzugsweise Sensoreinrichtung, der Behälterbehandlungsanlage). Vorteilhaft kann damit verhindert werden, dass von dem gerichteten Reinraumluftstrom mitgenommene Partikel bspw. die Behältermündung der Behälter erreichen und diese kontaminieren.

In einem Ausführungsbeispiel ist die Luftfördereinheit in dem Reinraum angeordnet, und/oder die Fluidleitung verläuft vollständig in dem Reinraum. Vorteilhaft kann damit ein besonders einfacher Aufbau realisiert werden.

In einem weiteren Ausführungsbeispiel weist die Behälterbehandlungsanlage ferner eine Antriebseinheit auf, die antreibend mit der Luftfördereinheit verbunden ist, wobei die Antriebseinheit außerhalb von dem Reinraum angeordnet ist. Vorzugsweise kann eine Außenwand des Reinraums eine abgedichtete Wellendurchführung aufweisen, durch die eine Antriebswelle verläuft, die die Antriebseinheit antreibend mit der Luftfördereinheit verbindet. Vorteilhaft kann damit auf eine aufwendige Kapselung der Antriebseinheit bei Anordnung im Reinraum verzichtet werden. Zudem besteht vorteilhaft die Möglichkeit zur Wartung der Antriebseinheit außerhalb des Reinraums.

In einer Ausführungsform ist der Reinraum mit Überdruck und/oder Sterilluft beaufschlagbar oder beaufschlagt. Vorteilhaft kann damit ein Eindringen von Partikeln usw. von außerhalb des Reinraums in ein Inneres des Reinraums aufgrund des bestehenden Druckgefälles verhindert werden.

In einer weiteren Ausführungsform ist der Lufteinlass, die Fluidleitung, die Luftfördereinheit und der Luftauslass frei von Sterilluftfiltern und/oder Sterilisiereinrichtungen zum Sterilisieren von Luft. Vorteilhaft kann damit die Integration des Lufteinlasses, der Fluidleitung, der Luftfördereinheit und des Luftauslasses im Reinraum selbst ausgenutzt werden, da aufgrund dieser Anordnung nur Reinraumluft aus dem Reinraum von der Luftführungseinrichtung zum Reinigen und/oder Kühlen verwendet wird.

In einer weiteren Ausführungsform ist mindestens eines erfüllt von:
- der Lufteinlass ist in einer oberen Hälfte, einem oberen Drittel oder einem oberen Viertel des Reinraums angeordnet;
- der Lufteinlass ist benachbart zu einem Luftzuführungsauslass einer (z. B. im Deckenbereich des Reinraums angeordneten) Reinraumluftzuführung zum Zuführen der Reinraumluft in den Reinraum angeordnet; und
- der Lufteinlass ist in einem Deckenbereich des Reinraums angeordnet.

Vorteilhaft kann die Luftführungseinrichtung somit Reinraumluft aus einem besonders partikelarmen Bereich des Reinraums beziehen. Dieser Bereich kann besonders partikelarm sein, weil einerseits vorhandene Partikel schwerkraftbedingt im Reinraum absinken und andererseits die Reinraumluft von der Reinraumluftzuführung vorteilhaft von oben bzw. im Deckenbereich des Reinraums im Top-Down-Prinzip zugeführt wird.

In einer Ausführungsvariante weist die mindestens eine Vorrichtung mindestens eine Behälterhalterung, vorzugsweise eine Neckhandling-Behälterhalterung, zum Halten eines Behälters auf. Der Luftauslass kann im Wesentlichen auf einer Höhe der mindestens einen Behälterhalterung oder unterhalb von der mindestens einen Behälterhalterung angeordnet sein. Optional kann der Luftauslass in einer Horizontalrichtung oder nach unten gerichtet sein. Vorteilhaft kann damit verhindert werden, dass von dem gerichteten Reinraumluftstrom mitgenommene Partikel bspw. die Behältermündung der Behälter erreichen und diese kontaminieren.

Beispielsweise kann die Behälterbehandlungsanlage zum Temperieren, Herstellen, Reinigen, Beschichten, Prüfen, Abfüllen, Verschließen, Pasteurisieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie, ausgebildet sein.

Beispielsweise können die Behälter als Flaschen, Dosen, Kanister, Kartons, Flakons, Tuben usw. ausgeführt sein.

Ein weiterer Aspekt betrifft ein Verfahren zum Betreiben einer Behälterbehandlungsanlage, vorzugsweise wie hierin offenbart, mit einem (z. B. mit Überdruck und/oder Sterilluft beaufschlagten) Reinraum. Das Verfahren weist (z. B gesteuert durch eine Steuereinrichtung der Behälterbehandlungsanlage) auf:
- Transportieren und/oder Behandeln von Behältern mittels mindestens einer Vorrichtung der Behälterbehandlungsanlage in dem Reinraum;
- Ansaugen von Reinraumluft (z. B. Sterilluft) durch einen in dem Reinraum angeordneten Lufteinlass einer (z. B. Reinigungs- und/oder Kühl-) Luftführungseinrichtung mittels einer Luftfördereinheit der Luftführungseinrichtung;
- Fördern der angesaugten Reinraumluft durch eine Fluidleitung der Luftführungseinrichtung mittels der Luftfördereinheit zu einem Luftauslass der Luftführungseinrichtung;
- Abgeben der geförderten Reinraumluft als einen gerichteten Reinraumluftstrom (z. B. Sterilluftstrom) aus dem Luftauslass, vorzugsweise in einer Richtung hin zu einer zu reinigenden und/oder zu kühlenden Komponente der Behälterbehandlungsanlage und/oder zum Entlangströmen entlang der transportierten und/oder behandelten Behälter; und
- Reinigen und/oder Kühlen mittels des gerichteten Reinraumluftstroms.

Vorteilhaft lassen sich mit dem Verfahren die gleichen Vorteile erzielen, die bereits unter Bezugnahme auf die Behälterbehandlungsanlage erläutert wurden. Selbiges gilt für die untenstehend erläuterten, bevorzugten Beispiele des Verfahrens.

In einem Ausführungsbeispiel ist mindestens eines erfüllt von:
- der gerichtete Reinraumluftstrom ist in einer Horizontalrichtung gerichtet oder nach unten gerichtet;
- der gerichtete Reinraumluftstrom trifft auf die Komponente und/oder passiert die Komponente zum Reinigen und/oder Kühlen der Komponente;
- der gerichtete Reinraumluftstrom entfernt Partikel von der Komponente, vorzugsweise in einer Richtung nach unten;
- der gerichtete Reinraumluftstrom lenkt von den Behältern herabrieselnde Partikel ab (z. B. weg von einer oder der zu reinigenden und/oder zu kühlenden Komponente, vorzugsweise Sensoreinrichtung, der Behälterbehandlungsanlage);
- der gerichtete Reinraumluftstrom ist derart ausgerichtet, dass er nur unterhalb einer Behältermündung der transportierten und/oder behandelten Behälter strömt;
- das Ansaugen, das Fördern, das Abgeben und das Reinigen und/oder Kühlen erfolgen während des Transportierens und/oder Behandelns der Behälter; und
- das Ansaugen, das Fördern, das Abgeben und das Reinigen und/oder Kühlen erfolgen kontinuierlich während des Transportierens und/oder Behandelns der Behälter oder diskontinuierlich zu vorgebbaren Zeitpunkten während des Transportierens und/oder Behandelns der Behälter.

In einem weiteren Ausführungsbeispiel ist die Komponente eine Sensoreinrichtung, vorzugsweise zum Erfassen der Behälter, die in dem Reinraum angeordnet ist. Optional ist die Sensoreinrichtung eine berührungslose und/oder optische Sensoreinrichtung, vorzugsweise aufweisend mindestens eines von einer Kamera, einem Ultraschallsensor, einem Lasersensor, einem Abstandsensor und einem LED-Sensor.

In einem weiteren Ausführungsbeispiel weist das Verfahren ferner auf:
- Antreiben der Luftfördereinheit, die in dem Reinraum angeordnet ist, von außerhalb des Reinraums mittels einer Antriebseinheit (z. B. der Luftführungseinrichtung), wobei die Antriebseinheit außerhalb von dem Reinraum angeordnet ist. Vorzugsweise kann eine Außenwand des Reinraums eine abgedichtete Wellendurchführung aufweisen, durch die eine Antriebswelle verläuft, die die Antriebseinheit antreibend mit der Luftfördereinheit verbindet.

Vorzugsweise kann sich der hierin verwendete Begriff "Steuereinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figur

Weitere Einzelheiten und Vorteile der Erfindung werden im Folgenden unter Bezug auf die beigefügte Zeichnung beschrieben. Es zeigt:

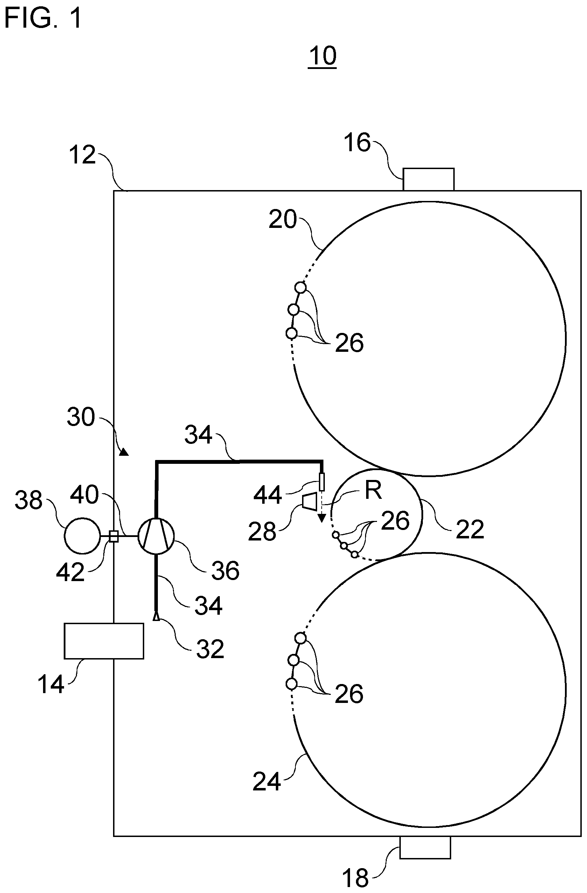

- Figur 1: eine schematische Darstellung einer Behälterbehandlungsanlage gemäß einem Ausführungsbeispiel.

### Detaillierte Beschreibung beispielhafter Ausführungsformen

Die Figur 1 zeigt rein schematisch eine Behälterbehandlungsanlage 10, z. B. eine Getränkeabfüllanlage.

Die Behälterbehandlungsanlage 10 weist einen Reinraum 12, mindestens eine Vorrichtung 20, 22, 24, eine Luftführungseinrichtung 30 und optional eine Komponente 28 auf.

Der Reinraum 12 kann auch als Isolator bezeichnet werden. Der Reinraum 12 kann im Wesentlichen frei bzw. arm an Partikeln (z. B. Teilchen aller Art und Größe) sein. Im Reinraum 12 können sterile Reinraumbedingungen herrschen. Der Reinraum 12 kann auch als ein Sterilraum oder Aseptikraum ausgeführt sein oder bezeichnet werden, da er vorzugsweise im Wesentlichen frei von Mikroorganismen ist.

Der Reinraum 12 ist mit Sterilluft (Reinraumluft) beaufschlagbar. Bevorzugt ist der Reinraum 12 derart mit Sterilluft beaufschlagbar, dass ein Luftdruck innerhalb des Reinraums 12 größer als in einer Umgebung des Reinraums 12 bzw. außerhalb des Reinraums 12 ist.

Die Sterilluft kann zu dem Reinraum 12 vorzugsweise über eine Reinraumluftzuführung 14 zugeführt werden. Bevorzugt kann die Reinraumluftzuführung 14 die Sterilluft von oben bzw. im Deckenbereich des Reinraums 12 zu dem Reinraum 12 zuführen. Beispielsweise kann ein Luftzuführungsauslass der Reinraumluftzuführung 14, durch den die Sterilluft in den Reinraum 12 einströmt, im Deckenbereich des Reinraum 12 angeordnet sein.

Die Reinraumluftzuführung 14 kann bspw. eine Sterilluftquelle aufweisen. Die Sterilluftquelle kann Sterilluft zu dem Reinraum 12 zuführen. Die Sterilluftquelle kann bspw. mindestens einen Luftfilter und/oder eine Luftfördereinrichtung, z. B. Gebläse oder Verdichter, aufweisen.

Vorzugsweise kann die Sterilluftquelle außerhalb des Reinraums 12 angeordnet oder von außerhalb des Reinraums 12 zugängig sein, sodass vorzugweise Komponenten (z. B. Luftfilter und/oder Luftfördereinrichtung) der Sterilluftquelle von außerhalb des Reinraums 12 gewartet, repariert oder gewechselt werden können.

Der Reinraum 12 kann bspw. eine Einhausung aufweisen. Die mindestens eine Vorrichtung 20, 22, 24 und die optonale Komponente 28 können von der Einhausung eingehaust sein, z. B. von oben und seitlich. Die Luftführungseinrichtung 30 kann ebenfalls zumindest teilweise von der Einhausung eingehaust sein, z. B. von oben und seitlich.

Der Reinraum 12 kann eine Einlassschleuse 16 für die Behälter aufweisen. Eine Transportvorrichtung kann die Behälter durch die Einlassschleuse von außerhalb des Reinraums 12 in den Reinraum 12 transportieren. Bevorzugt können die Behälter in der Einlassschleuse 16 oder (behälter-) stromaufwärts davon sterilisiert bzw. entkeimt werden. Beispielsweise können die Behälter in der Einlassschleuse oder davor zum Sterilisieren mit einem Sterilisationsmedium aufweisend Wasserstoffperoxid behandelt, z. B. besprüht oder benebelt, werden.

Der Reinraum 12 kann ferner eine Auslassschleuse 18 für die Behälter aufweisen. Eine Transportvorrichtung kann die Behälter durch die Auslassschleuse 18 von innerhalb des Reinraums 12 nach außerhalb des Reinraums 12 fördern.

Die mindestens eine Vorrichtung 20, 22, 24 kann die Behälter in dem Reinraum 12 behandeln und/oder transportieren. Die mindestens eine Vorrichtung 20, 22, 24 ist in dem Reinraum 12 angeordnet. Vorzugsweise kann die mindestens eine Vorrichtung 20, 22, 24 (behälter-) stromabwärts von der Einlassschleuse 16 und (behälter-) stromaufwärts von der Auslassschleuse 18 angeordnet sein.

Die mindestens eine Vorrichtung 20, 22, 24 kann jegliche denkbare Vorrichtung zum Behandeln und/oder Transportieren von Behältern aufweisen.

Beispielsweise kann mindestens eine Behandlungsvorrichtung 20, 24 umfasst sein, von der die Behälter behandelt, z. B. hergestellt, gefüllt und/oder verschlossen, und optional transportiert werden können. Bevorzugt kann die mindestens eine Behandlungsvorrichtung 20, 24 jeweils mehrere Behandlungsstationen zum gleichzeitigen bzw. zeitlich überlappenden Behandeln mehrerer Behälter aufweisen. Die Behandlungsstationen können vorzugsweise um einen Umfang eines drehbaren Karussells der bevorzugt als Rundläufer-Vorrichtung ausgeführten, mindestens einen Behandlungsvorrichtung 20, 24 angeordnet sein.

Beispielsweise kann mindestens eine Transportvorrichtung 22 umfasst sein, von der die Behälter transportiert werden können. Die Transportvorrichtung 22 kann die Behälter während des Transportierens bspw. beispielsweise bodenseitig, am Umfang und/oder im Halsbereich (sog. Neckhandling) abstützen. Die mindestens eine Transportvorrichtung 22 kann, wie in Figur 1 dargestellt, beispielsweise eine Rundläufer-Transportvorrichtung 22 sein oder aufweisen, zum Beispiel ein sogenannter Transportstern. Es ist jedoch auch möglich, dass die mindestens eine Transportvorrichtung eine Lineartransportvorrichtung ist oder aufweist (nicht in Figur 1 dargestellt).

Die mindestens eine Vorrichtung 20, 22, 24 kann jeweils mehrere Behälterhalterungen 26 aufweisen, mit denen die Behälter während der Behandlung und/oder während des Transports gehalten werden können. Die Behälterhalterungen 26 können bspw. jeweils eine Stützplatte aufweisen, auf der ein Behälter aufrecht stehen kann. Alternativ oder zusätzlich können die Behälterhalterungen 26 bspw. jeweils eine Klammer oder einen Greifer aufweisen, die/der einen Behälter an dessen Mantel, Hals und/oder Halsring halten kann. Beispielsweise können die Behälterhalterungen 26 (z. B. zusammen mit den jeweiligen Behandlungsstationen) verteilt um einen Umfang eines drehbaren Karussells der bevorzugt als Rundläufer ausgeführten, mindestens einen Vorrichtung 20, 22, 24 angeordnet sein.

Die Komponente 28 kann in dem Reinraum 12 angeordnet sein. Die Komponente 28 kann von der Luftführungseinrichtung 30 gereinigt und/oder gekühlt werden. Eine Reinigung kann bspw. erforderlich sein, weil es durch Abrieb beim Handhaben / Transportieren der Behälter im Reinraum 12, z. B. beim sogenannten Neckhandling, dazu kommen kann, dass Partikel im Reinraum 12 entstehen und bspw. von den Behältern herabrieseln. Diese Partikel können die Komponente 28 verschmutzen und deren Funktionsfähigkeit beeinträchtigen.

Beispielsweise kann die Komponente 28 eine Sensoreinrichtung sein, wie beispielhaft in Figur 1 dargestellt ist. Mittels der Sensoreinrichtung können bspw. die Behälter und/oder Bauteile der mindestens einen Vorrichtung 20, 22, 24, wie z. B. die Behälterhalterungen 26, erfasst und überwacht werden. Mittels der Luftführungseinrichtung 30 kann die Sensoreinrichtung gereinigt und/oder gekühlt werden, vorzugsweise um eine Funktionsfähigkeit der Sensoreinrichtung aufrechtzuerhalten.

Bevorzugt kann die Sensoreinrichtung eine berührungslose und/oder optische Sensoreinrichtung sein. Beispielsweise kann die Sensoreinrichtung eine Kamera, einen Ultraschallsensor, einen Lasersensor, einen Abstandsensor und/oder einem LED-Sensor aufweisen.

Es ist auch möglich, dass die Komponente 28 bspw. ein elektrisches oder elektronisches Bauteil oder ein Lager, z. B. Drehlager, ist, das zu reinigen und/oder zu kühlen ist.

Allgemein ausgedrückt, kann die Komponente 28 jegliche in dem Reinraum 12 angeordnete, zu reinigende und/oder zu kühlende Komponente sein.

Es versteht sich, dass auch mehrere Komponenten 28 umfasst sein können, die von der Luftführungseinrichtung 30 mittels eines jeweiligen gerichteten Reinraumluftstroms oder eines gemeinsamen gerichteten Reinraumluftstroms gereinigt und/oder gekühlt werden können.

Die Luftführungseinrichtung 30 weist einen Lufteinlass 32, eine Fluidleitung 34, eine Luftfördereinheit 36 und einen Luftauslass 44 auf.

Der Lufteinlass 32 ist in dem Reinraum 12 zum Empfangen von Reinraumluft aus dem Reinraum 12 angeordnet. Bevorzugt kann der Lufteinlass 32 innerhalb von der Einhausung des Reinraums 12 angeordnet sein.

Beispielsweise kann der Lufteinlass 32 in einer oberen Hälfte, einem oberen Drittel oder einer oberen Viertel des Reinraums 12 angeordnet sein, z. B. in einem Deckenbereich des Reinraums 12 bzw. der Einhausung. Beispielsweise kann der Lufteinlass 32 an dem Deckenbereich aufgehängt sein.

Besonders bevorzugt kann der Lufteinlass 32 der Luftführungseinrichtung 30 benachbart zu dem Luftzuführungsauslass der Reinraumluftzuführung 14 angeordnet sein, z. B. in einem Umkreis von ≤ 2 m oder ≤ 1 m zu dem Luftzuführungsauslass.

Bevorzugt kann der Lufteinlass 32 als ein freies Leitungsende ausgeführt sein. Das freie Leitungsende kann in dem Reinraum 12 zum Empfangen der Reinraumluft direkt aus dem Reinraum 12 angeordnet sein. Die Reinraumluft kann direkt aus dem Reinraum 12 in den Lufteinlass 32 einströmen.

Die Fluidleitung 34 verbindet den Lufteinlass 32 und den Luftauslass 44 miteinander. Über die Fluidleitung 34 kann die Reinraumluft von dem Lufteinlass 32 zu dem Luftauslass 44 geführt werden. Beispielsweise kann die Fluidleitung 34 als eine einzige Rohrleitung oder als ein Rohrleitungssystem ausgeführt sein.

Vorzugsweise kann eine Leitungslänge der Fluidleitung 34 auf der Druck- und Saugseite bezüglich der Luftfördereinheit möglichst kurz gehalten sein und die Fluidleitung 34 nach hygienischen Anforderungen konstruiert sein.

Bevorzugt verläuft die Fluidleitung 34 vollständig in dem Reinraum 12. Die Fluidleitung 34 kann innerhalb von der Einhausung des Reinraums 12 angeordnet sein.

Die Luftfördereinheit 36 ist zum Fördern von Luft ausgebildet. Beispielsweise kann die Luftfördereinheit 36 ein Gebläse oder ein Verdichter sein. Die Luftfördereinheit 36 kann die Luft mit einem Druckniveau fördern, das höher ist als ein Druckniveau der Reinraumluft im Reinraum 12.

Die Luftfördereinheit 36 ist in der Fluidleitung 34 angeordnet. Mittels der Luftfördereinheit 36 kann Reinraumluft von dem Lufteinlass 32 angesaugt werden. Mittels der Luftfördereinheit 36 kann die angesaugte Reinraumluft durch die Fluidleitung 34 zu dem Luftauslass 44 gefördert werden.

Die Luftfördereinheit 36 ist vorzugsweise in dem Reinraum 12 angeordnet, wie in Figur 1 beispielhaft dargestellt ist. Bevorzugt ist die Luftfördereinheit 36 innerhalb von der Einhausung des Reinraums 12 angeordnet.

Alternativ ist es bspw. möglich, dass die Luftfördereinheit 36 außerhalb von dem Reinraum 12 angeordnet ist (nicht in Figur 1 dargestellt). Beispielsweise kann die Fluidleitung 34 einen Teilabschnitt aufweisen, der außerhalb von dem Reinraum 12 verläuft. Die Luftfördereinheit 36 kann in diesem Teilabschnitt angeordnet sein. Der Teilabschnitt kann stromabwärts von dem Lufteinlass 32 und stromaufwärts von dem Luftauslass 44 angeordnet sein.

Eine Antriebseinheit 38 kann antreibend mit der Luftfördereinheit 36 verbunden sein. Beispielsweise ist die Antriebseinheit 38 mittels einer Antriebswelle 40 antreibend mit der Luftfördereinheit 36, z. B. einem Förderrad oder einem Förderkolben, der Luftfördereinheit 36 verbunden. Die Antriebseinheit 38 kann beispielsweise ein Elektromotor sein.

Die Luftfördereinheit 36 kann bspw. kontinuierlich während eines Betriebs der mindestens einen Vorrichtung 20, 22, 24 betrieben und/oder von der Antriebseinheit 38 angetrieben werden, z. B. gesteuert von einer Steuereinrichtung der Luftführungseinrichtung 30. Alternativ kann die Luftfördereinheit 36 bspw. diskontinuierlich während eines Betriebs der mindestens einen Vorrichtung 20, 22, 24 betrieben und/oder von der Antriebseinheit 38 angetrieben werden, z. B. gesteuert von einer Steuereinrichtung der Luftführungseinrichtung 30.

Bevorzugt ist die Antriebseinheit 38 außerhalb von dem Reinraum 12 angeordnet. Die Antriebswelle 40 kann vorzugsweise durch eine abgedichtete Wellendurchführung 42 in einer Außenwand des Reinraums 12 bzw. der Einhausung verlaufen.

Alternativ ist es bspw. möglich, dass die Antriebseinheit 38 innerhalb von dem Reinraum 12 angeordnet und beispielsweise gekapselt ist.

Der Luftauslass 44 ist in dem Reinraum 12 angeordnet. Bevorzugt ist der Luftauslass 44 benachbart zu der Komponente 28 angeordnet.

Der Luftauslass 44 ist dazu ausgebildet, die von der Luftfördereinheit 36 durch die Fluidleitung 34 geförderte Reinraumluft zu empfangen und diese als einen gerichteten Reinraumluftstrom R zum Reinigen und/oder Kühlen abzugeben. Beispielsweise kann der Luftauslass 44 einen Düsenabschnitt zum Erzeugen des gerichteten Reinraumluftstroms R aufweisen und/oder als ein freies Leitungsende ausgeführt sein.

Bevorzugt kann der gerichtete Reinraumluftstrom R in einer Richtung hin zu der Komponente 28 abgegeben werden, um diese zu kühlen und/oder zu reinigen. Alternativ oder zusätzlich kann der gerichtete Reinraumluftstrom R bspw. entlang der von den Behälterhalterungen 26 gehaltenen Behälter strömen und dabei von den Behältern herabrieselnde Partikel ablenken (umlenken/mitnehmen).

Der Luftauslass 44 ist vorzugsweise in einer Horizontalrichtung gerichtet oder nach unten gerichtet. Entsprechend kann der Reinraumluftstrom R in einer Horizontalrichtung oder nach unten gerichtet sein.

Beispielsweise kann der Luftauslass 44 auf einer Höhe der Behälterhalterungen 26 oder unterhalb von den Behälterhalterungen 26 angeordnet sein. Bevorzugt ist der gerichtete Reinraumluftstrom R derart ausgerichtet, dass er nur unterhalb einer Behältermündung der von der mindestens einen Vorrichtung 20, 22, 24 transportierten und/oder behandelten Behälter strömt.

Im Einzelnen kann der Luftauslass 44 so relativ zu der Komponente 28 ausgerichtet sein, dass der aus dem Luftauslass 44 abgegebene, gerichtete Reinraumluftstroms R auf die Komponente 28 trifft und/oder die Komponente 28 passiert (vorbeiströmt). Beispielsweise kann der gerichtete Reinraumluftstrom R ein Sensorfenster oder eine Sensoroberfläche der als Sensoreinrichtung ausgeführten Komponente 28 passieren und/oder auf diese auftreffen. Der gerichtete Reinraumluftstrom R kann Partikel von der Komponente 28 entfernen und/oder die Komponente 28 kühlen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Reinraums, der mindestens einen Vorrichtung, der Luftführungseinrichtung, des Lufteinlasses, der Fluidleitung, der Fördereinheit und/oder des Luftauslasses des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Behälterbehandlungsanlage
- 12: Reinraum
- 14: Reinraumluftzuführung
- 16: Einlassschleuse
- 18: Auslassschleuse
- 20: Vorrichtung
- 22: Vorrichtung
- 24: Vorrichtung
- 26: Behälterhalterung
- 28: Komponente
- 30: Luftführungseinrichtung
- 32: Lufteinlass
- 34: Fluidleitung
- 36: Luftfördereinheit
- 38: Antriebseinheit
- 40: Antriebswelle
- 42: Wellendurchführung
- 44: Luftauslass

- R: gerichteter Reinraumluftstrom

## Patentansprüche

1. Behälterbehandlungsanlage (10) aufweisend:
einen Reinraum (12);
mindestens eine Vorrichtung (20, 22, 24) zum Transportieren und/oder Behandeln von Behältern, wobei die mindestens eine Vorrichtung (20, 22, 24) in dem Reinraum (12) angeordnet ist; und
eine Luftführungseinrichtung (30) aufweisend:
- einen Lufteinlass (32), der in dem Reinraum (12) zum Empfangen von Reinraumluft aus dem Reinraum (12) angeordnet ist;
- einen Luftauslass (44), der in dem Reinraum (12) zum Abgeben eines gerichteten Reinraumluftstroms (R) zum Reinigen und/oder Kühlen angeordnet ist;
- eine Fluidleitung (34), die den Lufteinlass (32) und den Luftauslass (44) miteinander verbindet; und
- eine Luftfördereinheit (36), die in der Fluidleitung (34) zum Ansaugen der Reinraumluft von dem Lufteinlass (32) und Fördern der angesaugten Reinraumluft zu dem Luftauslass (44) angeordnet ist.

2. Behälterbehandlungsanlage (10) nach Anspruch 1, wobei mindestens eines erfüllt ist von:
der Luftauslass (44) weist einen Düsenabschnitt zum Erzeugen des gerichteten Reinraumluftstroms (R) auf;
der Lufteinlass (32) ist als ein freies Leitungsende ausgeführt; und
der Luftauslass (44) ist als ein freies Leitungsende ausgeführt.

3. Behälterbehandlungsanlage (10) nach Anspruch 1 oder Anspruch 2, wobei:
der Luftauslass (44) in einer Horizontalrichtung gerichtet ist oder nach unten gerichtet ist.

4. Behälterbehandlungsanlage (10) nach einem der vorherigen Ansprüche, wobei:
der Luftauslass (44) zum Abgeben des gerichteten Reinraumluftstroms (R) in einer Richtung hin zu einer zu reinigenden und/oder zu kühlenden Komponente (28) der Behälterbehandlungsanlage (10) angeordnet ist; und
die zu reinigende und/oder zu kühlende Komponente (28) in dem Reinraum (12) angeordnet ist,
wobei vorzugsweise:
der Luftauslass (44) benachbart zu der zu reinigenden und/oder zu kühlenden Komponente (28) angeordnet ist; und/oder
der Luftauslass (44) so relativ zu der zu reinigenden und/oder zu kühlenden Komponente (28) ausgerichtet ist, dass der aus dem Luftauslass (44) abgebbare, gerichtete Reinraumluftstrom (R) auf die zu reinigende und/oder zu kühlenden Komponente (28), trifft und/oder die zu reinigende und/oder zu kühlenden Komponente (28) passiert.

5. Behälterbehandlungsanlage (10) nach Anspruch 4, wobei:
die zu reinigende und/oder zu kühlende Komponente (28) eine Sensoreinrichtung, vorzugsweise zum Erfassen der Behälter, ist, die in dem Reinraum (12) angeordnet ist; und optional
die Sensoreinrichtung eine berührungslose und/oder optische Sensoreinrichtung ist, vorzugsweise aufweisend mindestens eines von einer Kamera, einem Ultraschallsensor, einem Lasersensor, einem Abstandsensor und einem LED-Sensor.

6. Behälterbehandlungsanlage (10) nach einem der vorherigen Ansprüche, wobei:
der Luftauslass (44) so angeordnet ist, dass der gerichtete Reinraumluftstrom (R) zum Entlangströmen an den von der mindestens einen Vorrichtung (20, 22, 24) behandelten und/oder transportierten Behältern (12) abgebbar ist, vorzugsweise unterhalb von einer Behältermündung der Behälter (12) und/oder zum Ablenken von von den Behältern herabrieselnden Partikeln.

7. Behälterbehandlungsanlage (10) nach einem der vorherigen Ansprüche, wobei mindestens eines erfüllt ist von:
die Luftfördereinheit (36) ist in dem Reinraum (12) angeordnet; und
die Fluidleitung (34) verläuft vollständig in dem Reinraum (12).

8. Behälterbehandlungsanlage (10) nach einem der vorherigen Ansprüche, ferner aufweisend:
eine Antriebseinheit (38), die antreibend mit der Luftfördereinheit (36) verbunden ist, wobei die Antriebseinheit (38) außerhalb von dem Reinraum (12) angeordnet ist, wobei vorzugsweise:
eine Außenwand des Reinraums (12) eine abgedichtete Wellendurchführung (42) aufweist, durch die eine Antriebswelle (40) verläuft, die die Antriebseinheit (38) antreibend mit der Luftfördereinheit (36) verbindet.

9. Behälterbehandlungsanlage (10) nach einem der vorherigen Ansprüche, wobei mindestens eines erfüllt ist von:
der Reinraum (12) ist mit Überdruck und/oder Sterilluft beaufschlagbar oder beaufschlagt; und
der Lufteinlass (32), die Fluidleitung (34), die Luftfördereinheit (36) und der Luftauslass (44) sind frei von Sterilluftfiltern und/oder Sterilisiereinrichtungen zum Sterilisieren von Luft.

10. Behälterbehandlungsanlage (10) nach einem der vorherigen Ansprüche, wobei mindestens eines erfüllt ist von:
der Lufteinlass (32) ist in einer oberen Hälfte, einem oberen Drittel oder einem oberen Viertel des Reinraums (12) angeordnet;
der Lufteinlass (32) ist benachbart zu einem Luftzuführungsauslass einer Reinraumluftzuführung (14) zum Zuführen der Reinraumluft in den Reinraum (12) angeordnet; und
der Lufteinlass (32) ist in einem Deckenbereich des Reinraums (12) angeordnet.

11. Behälterbehandlungsanlage (10) nach einem der vorherigen Ansprüche, wobei:
die mindestens eine Vorrichtung (20, 22, 24) mindestens eine Behälterhalterung (26), vorzugsweise eine Neckhandling-Behälterhalterung, zum Halten eines Behälters aufweist; und
der Luftauslass (44) im Wesentlichen auf einer Höhe der mindestens einen Behälterhalterung (26) oder unterhalb von der mindestens einen Behälterhalterung (26) angeordnet ist; und optional
der Luftauslass (44) in einer Horizontalrichtung oder nach unten gerichtet ist.

12. Verfahren zum Betreiben einer Behälterbehandlungsanlage (10), vorzugsweise nach einem der vorherigen Ansprüche, mit einem Reinraum (12), wobei das Verfahren aufweist:
Transportieren und/oder Behandeln von Behältern mittels mindestens einer Vorrichtung (20, 22, 24) der Behälterbehandlungsanlage (10) in dem Reinraum (12);
Ansaugen von Reinraumluft durch einen in dem Reinraum (12) angeordneten Lufteinlass (32) einer Luftführungseinrichtung (30) mittels einer Luftfördereinheit (36) der Luftführungseinrichtung (30);
Fördern der angesaugten Reinraumluft durch eine Fluidleitung (34) der Luftführungseinrichtung (30) mittels der Luftfördereinheit (36) zu einem Luftauslass (44) der Luftführungseinrichtung (30);
Abgeben der geförderten Reinraumluft als einen gerichteten Reinraumluftstrom (R) aus dem Luftauslass (44), vorzugsweise in einer Richtung hin zu einer zu reinigenden und/oder zu kühlenden Komponente (28) der Behälterbehandlungsanlage (10) und/oder zum Entlangströmen entlang der transportierten und/oder behandelten Behälter; und
Reinigen und/oder Kühlen mittels des gerichteten Reinraumluftstroms (R).

13. Verfahren nach Anspruch 12, wobei mindestens eines erfüllt ist von:
der gerichtete Reinraumluftstrom (R) ist in einer Horizontalrichtung gerichtet oder nach unten gerichtet;
der gerichtete Reinraumluftstrom (R) trifft auf die Komponente (28) und/oder passiert die Komponente (28) zum Reinigen und/oder Kühlen der Komponente (28);
der gerichtete Reinraumluftstrom (R) entfernt Partikel von der Komponente (28), vorzugsweise in einer Richtung nach unten;
der gerichtete Reinraumluftstrom (R) lenkt von den Behältern herabrieselnde Partikel ab;
der gerichtete Reinraumluftstrom (R) ist derart ausgerichtet, dass er nur unterhalb einer Behältermündung der transportierten und/oder behandelten Behälter strömt;
das Ansaugen, das Fördern, das Abgeben und das Reinigen und/oder Kühlen erfolgen während des Transportierens und/oder Behandelns der Behälter; und
das Ansaugen, das Fördern, das Abgeben und das Reinigen und/oder Kühlen erfolgen kontinuierlich während des Transportierens und/oder Behandelns der Behälter oder diskontinuierlich zu vorgebbaren Zeitpunkten während des Transportierens und/oder Behandelns der Behälter.

14. Verfahren nach Anspruch 12 oder Anspruch 13, wobei:
die Komponente (28) eine Sensoreinrichtung, vorzugsweise zum Erfassen der Behälter, ist, die in dem Reinraum (12) angeordnet ist; und optional
die Sensoreinrichtung eine berührungslose und/oder optische Sensoreinrichtung ist, vorzugsweise aufweisend mindestens eines von einer Kamera, einem Ultraschallsensor, einem Lasersensor, einem Abstandsensor und einem LED-Sensor.

15. Verfahren nach einem der Ansprüche 12 bis 14, ferner aufweisend:
Antreiben der Luftfördereinheit (36), die in dem Reinraum (12) angeordnet ist, von außerhalb des Reinraums (12) mittels einer Antriebseinheit (38), die außerhalb von dem Reinraum (12) angeordnet ist,
wobei vorzugsweise:
eine Außenwand des Reinraums (12) eine abgedichtete Wellendurchführung (42) aufweist, durch die eine Antriebswelle (40) verläuft, die die Antriebseinheit (38) antreibend mit der Luftfördereinheit (36) verbindet.
